# EUROPÄISCHE PATENTANMELDUNG

(11) **EP 1 901 015 A2**
(43) Veröffentlichungstag der Anmeldung: **19.03.2008**
(21) Anmeldenummer: 07116426.3
(22) Anmeldetag: 14.09.2007
(51) Int. Cl.: F25D 23/12, A47J 31/00

(54) **Kühlvorrichtung zur Aufnahme eines Milchbehälters sowie Kaffeemaschine mit einer solchen Kühlvorrichtung**

(30) Priorität: 16.09.2006 DE 202006014208 U
(71) Anmelder: WIK Far East Ltd., North Point, Hong Kong (CN)
(72) Erfinder: Steckhan, Markus, 45481, Mülheim (DE)
(74) Vertreter: Haverkamp, Jens

(57) **Zusammenfassung**

Eine Kühlvorrichtung 2 dient zur Aufnahme eines Milchbehälters 5. Die Kühlvorrichtung 2 verfügt über eine Entnahmeeinrichtung zum Entnehmen von in dem Milchbehälter 5 enthaltener Milch mit einer zum Anschließen an eine Pumpe geeigneten Milchansaugleitung. Des Weiteren umfasst die Kühlvorrichtung eine elektrische Stromversorgung 19.

Gemäß einer ersten Ausgestaltung ist vorgesehen, dass die Stromversorgung 19 der Kühlvorrichtung eine Stromüberwachungseinrichtung zum Überwachen des Zustands einer der Kühlvorrichtung 2 zugeordneten Milch ausgebenden und/oder Milch verarbeitenden Maschine 1 umfasst und die Kühlvorrichtung 2 bestromt ist, wenn die Maschine 1 eingeschaltet ist.

Gemäß einer weiteren Ausgestaltung ist vorgesehen, dass die Kühlvorrichtung 2 zumindest ein den Innenraum 4 kühlendes Element aufweist. Bei diesem kann es sich beispielsweise um ein Peltierelement handeln.

Gemäß noch einem Vorschlag ist vorgesehen, dass die Kühlvorrichtung 2 eine Einrichtung 26, 27 zum Erhöhen des statischen Drucks in dem Innenraum 4 der Kühlvorrichtung aufweist.

Zudem wird eine Kühlvorrichtung beschrieben, die eine Einrichtung zum Erzeugen von Ozon aufweist, welche Ozonerzeugungseinrichtung ausgelegt ist, damit das Ozon oberhalb der Entnahmeöffnung 7 des Milchbehälters 5 in den Innenraum 4 der Kühlvorrichtung 2 eintritt oder dort gebildet wird.

## Beschreibung

Die Erfindung betrifft eine Kühlvorrichtung zur Aufnahme eines Milchbehälters, umfassend eine Entnahmeeinrichtung zum Entnehmen von in dem Milchbehälter enthaltener Milch mit einer zum Anschließen an eine Pumpe geeigneten Milchansaugleitung sowie eine elektrische Stromversorgung. Ferner betrifft die Erfindung eine Kaffeemaschine mit einer solchen Kühlvorrichtung.

Kaffeemaschinen, insbesondere solche, die als so genannter Vollautomaten ausgelegt sind, verfügen in aller Regel über eine Einrichtung zum Erzeugen eines Milchschaumgetränkes, beispielsweise eines Cappuccinos. Eine solche Milchaufschäumeinrichtung verfügt über eine Pumpe, an die eine in einen Milchbehälter hineinreichende Milchansaugleitung angeschlossen ist. Bei einer solchen Pumpe kann es sich um eine elektrisch betriebene Pumpe oder auch um eine nach einem Saugstrahlprinzip arbeitende Pumpe handeln. Wird der Milchschaum mittels Heißdampf erzeugt, wird die Milch in aller Regel mit einer Saugstrahlpumpe aus einem Behälter angesaugt.

Im Gastronomiebereich mit einem entsprechend hohen Durchsatz an derartigen Getränken stellt man einen Milchbehälter, beispielsweise eine Milchtüte, neben die Kaffeemaschine und hängt das freie Ende der Milchansaugleitung in den Milchbehälter hinein. Eine Milchkühlung ist nicht notwendig, da aufgrund des hohen Getränkedurchsatzes die Milch in kurzer Zeit aufgebraucht ist. In zunehmendem Maße werden jedoch auch im Haushalts- und Bürobereich Kaffeevollautomaten verwendet. Diese Kaffeemaschinen sind auch zur Cappuccinobereitung ausgelegt. Wie im Gastronomiebereich befindet sich üblicherweise der Milchbehälter neben der Kaffeemaschine. Zum Frischhalten der Milch werden thermisch isolierte Kühlbehälter verwendet, in die die typischerweise in einer Tüte befindliche Milch, auf Kühlschranktemperatur gekühlt, eingestellt wird. Aufgrund der thermischen Isolierung bleibt die in der Kühlvorrichtung befindliche Milch länger frisch. Darüber hinaus sind aktive Kühleinrichtungen bekannt geworden, die nach Art eines Kühlschrankes ausgelegt sind. Diese vorbekannten Kühlvorrichtungen sind für den Gastronomiebereich konzipiert. Die Kühlleistung einer solchen Kühlvorrichtung ist ausgelegt, um auch in relativ kurzer Zeit eine auf Umgebungstemperatur befindliche Milchtüte samt Inhalt in kurzer Zeit zu kühlen. Für den Haushalts- und Bürobereich ist dieses nicht unbedingt erforderlich. Vielmehr wird man bei diesen Anwendungen bestrebt sein, nicht nur den Platzbedarf, sondern auch den Stromverbrauch gering zu halten.

Der Erfindung liegt daher die Aufgabe zugrunde, eine Kühlvorrichtung der vorgenannten Art weiterzubilden, die mit wenig Strom verbrauchenden Aktoren ein ausreichendes Maß an Kühlleistung bereitstellt, um den Anforderungen an eine verlängerte Haltbarkeit der in die Kühlvorrichtung eingestellten Milch bei geringen Stromverbrauch und möglichst ohne entstehende Störgeräusche ermöglicht.

Gelöst wird diese Aufgabe jeweils unabhängig voneinander oder auch in Kombination mit einander durch eine Kühlvorrichtung mit den Merkmalen der Ansprüche 1, 4, 7 und/oder 8.

Gemeinsam ist diesen Kühlvorrichtungen, dass sie im Unterschied zu unbestromten Kühlvorrichtungen über eine elektrische Stromversorgung verfügen, um mit dieser ein oder mehrere elektrische Aktoren als Teil der Kühlvorrichtung zu betreiben. Der oder die elektrischen Aktoren der Kühlvorrichtung dienen unter anderem dem Zweck, die Haltbarkeit eines in den Innenraum des Kühlbehälters abgestellten Milchbehälters zu verlängern. Gemäß einem Aspekt der Erfindung wird dieses Ziel dadurch erreicht, dass die Kühlvorrichtung über eine Kühleinrichtung verfügt, um den in dem Innenraum der Kühlvorrichtung befindlichen Milchbehälter beziehungsweise die darin enthaltene Milch zu kühlen. Dabei kann die Kühleinrichtung so ausgelegt sein, dass die Milch nicht notwendigerweise gekühlt in die Kühlvorrichtung eingesetzt werden muss, sondern durch die Kühlvorrichtung selbst von der Umgebungstemperatur auf die gewünschte Kühltemperatur gekühlt wird. Soll jedoch der Stromverbrauch reduziert sein, wird man vorgekühlte Milch in die Kühlvorrichtung einstellen. Entsprechend geringer dimensioniert kann die Kühleinrichtung konzipiert sein, was sich vorteilhaft in Bezug auf eine Minimierung von Bauraum und möglicher Geräuschentwicklungen auswirkt.

Als besonders vorteilhaft wird eine Kühleinrichtung angesehen, die als den Innenraum der Kühlvorrichtung kühlendes Element ein Peltierelement aufweist, welches zum Kühlen des den Milchbehälter aufnehmenden Innenraums geschaltet ist. Dem Peltierelement ist ein Kühlelement zugeordnet, das die aus dem Innenraum der Kühlvorrichtung abgeführte Wärme abgibt. Gemäß einer bevorzugten Ausgestaltung verfügt das Kühlelement über einen in das Kühlelement integrierten flüssigkeitsdurchströmbaren Kanal, der typischerweise nach Art von mehreren Mäandern und somit nach Art von Bögen hin und her verlaufend angeordnet ist. Dieser Kanal ist in die Milchansaugleitung eingeschaltet. Damit dient das Kühlelement der Kühleinrichtung zum Erwärmen der aus dem Milchbehälter gekühlt über die Milchansaugleitung entnommenen Milch, wenn diese zum Bereiten eines warmen Milchgetränkes, insbesondere eines Milchschaumgetränkes von einer der Kühlvorrichtung zugeordneten Getränkezubereitungsmaschine, beispielsweise einer Kaffeemaschine entnommen wird. Die dann für die Getränkebereitung verwendete Milch ist vorgewärmt und braucht im Zuge der Getränkebereitung weniger stark erwärmt zu werden. Dies beschleunigt nicht nur die Getränkebereitung, sondern ermöglicht auch die Bereitstellung eines von seiner Temperatur her wärmeren Milchschaums. Zudem unterstützt die Wärmeabgabe von dem Kühlelement auf die das Kühlelement durchströmende kalte Milch den Kühlprozess.

Gemäß einer anderen Ausgestaltung verfügt die Kühlvorrichtung zum Verlängern der Haltbarkeit der in die Kühlvorrichtung eingestellten Milch über eine Ozonerzeugungseinrichtung. Mit dieser wird in dem den Milchbehälter aufnehmenden Innenraum der Kühlvorrichtung durch das Erzeugen von Ozon eine Schutzgasatmosphäre erzeugt, wodurch Keime abgetötet und dadurch die Haltbarkeit der in der Kühlvorrichtung befindlichen Milch verbessert ist. Unterstützt werden kann diese Maßnahme durch Vorsehen einer Einrichtung, mit der der statische Druck in dem den Milchbehälter aufnehmenden Innenraum der Kühlvorrichtung geringfügig oberhalb des Umgebungsdruckes gehalten wird. Die Maßnahme, den Innendruck innerhalb des Kühlbehälters gegenüber dem Umgebungsdruck zu erhöhen, kann grundsätzlich auch unabhängig von dem Vorhandensein bzw. Nichtvorhandensein einer vorbeschriebenen Ozonerzeugungseinrichtung eingesetzt werden. Beide Maßnahmen tragen unabhängig voneinander Sorge dafür, dass von außen keine oder nur eine deutlich verringerte Anzahl Keime in den Innenraum des Kühlbehälters eindringen. In Kombination ergänzen sich beide Maßnahmen und führen zu einer weiteren Verlängerung der Haltbarkeit der in die Kühlvorrichtung eingestellten Milch.

Die Kühlvorrichtung wird bei ihrem Betrieb regelmäßig einer die Milch ausgebenden und/oder verarbeitenden Maschine, beispielsweise einer Kaffeemaschine zugeordnet sein, die eine zur Milchentnahme notwendige Pumpe aufweist. Typischerweise wird mit einer Kaffeemaschine auch Milchschaum für Cappuccinogetränke oder andere Milchschaum benötigende Getränke bereitet. Über einen solchen Aufschäumer wird die in der Kühlvorrichtung enthaltene Milch nach Art eines Saugstrahlprinzips angesaugt. In einem solchen Fall ist es nicht unbedingt notwendig, eine zusätzliche Pumpe zum Fördern der Milch einzusetzen.

Gerade bei Haushalts- und Büroanwendungen ist es gewünscht, den Stromverbrauch gering zu halten. Insbesondere ist ein Betrieb der Getränkezubereitungsmaschine entweder nur mehrmals täglich oder nur über eine gewisse Zeitspanne eingeschaltet. Die in dem Milchbehälter vorhandene Milch kann für die Nichtbenutzungszeiten der Kaffeemaschine in einen ohnehin anderweitig vorhandenen Kühlschrank eingestellt werden. In einem solchen Fall ist ein Betrieb der Kühlvorrichtung grundsätzlich nur dann notwendig, wenn auch die Kaffeemaschine als beispielhaft Milch ausgebende und/oder Milch verarbeitende Maschine eingeschaltet ist. Zu diesem Zweck verfügt die Kühlvorrichtung gemäß einer Ausgestaltung der Erfindung über eine Stromüberwachungseinrichtung zum Überwachen des Zustandes der der Kühlvorrichtung zugeordneten Kaffeemaschine. Diese Stromüberwachungseinrichtung ist dergestalt konzipiert, dass die Kühlvorrichtung nur dann bestromt ist, wenn die Kaffeemaschine ihrerseits eingeschaltet ist. Ist die Kaffeemaschine ausgeschaltet, ist ebenfalls die Kühlvorrichtung ausgeschaltet. Grundsätzlich lässt sich dieses dadurch erreichen, dass die Kaffeemaschine eine zum Anschließen der Kühlvorrichtung vorgesehene Steckdose aufweist, die nur dann bestromt ist, wenn die Kaffeemaschine eingeschaltet ist. Ist das Vorsehen einer solchen Steckdose an der Kaffeemaschine nicht gewünscht, kann die gewünschte Stromüberwachung dadurch realisiert sein, dass die Kühlvorrichtung über einen Stecker zum Anschließen der Kühlvorrichtung an eine an das Stromnetz angeschlossene Steckdose verfügt und dieser Stecker selbst rückseitig eine Steckdose für den elektrischen Anschlussstecker der Kaffeemaschine aufweist. In dem Stecker der Kühlvorrichtung ist die Stromüberwachungseinrichtung integriert, beispielsweise nach Art einer Widerstandsschaltung. Auf diese Weise wird nicht nur dafür Sorge getragen, dass die beiden Geräte nur eine einzige Steckdose belegen, sondern dass gleichfalls eine mit einfachen Mitteln realisierbare Stromüberwachung der der Kühlvorrichtung zugeordneten Kaffeemaschine möglich ist.

Nachfolgend ist die Erfindung anhand eines Ausführungsbeispiels unter Bezugnahme auf die beigefügten Figuren beschrieben. Es zeigen:
- **Fig. 1:**: eine schematisierte Ansicht einer Kaffeemaschine mit einer dieser zugeordneten Kühlvorrichtung,
- **Fig.2:**: eine vergrößerte schematisierte Schnittsdarstellung der Kühlvorrichtung der Figur 1 und
- **Fig. 3:**: der untere Abschnitt eines der Kühlvorrichtung zugeordneten Entnahmerohres gemäß einer weiteren Ausgestaltung.

Eine Kaffeemaschine 1 ist als so genannter Vollautomat ausgebildet und somit geeignet, tassenweise aus frisch gemahlenen Kaffeebohnen ein Kaffeegetränk zu brühen. Die Kaffeemaschine 1 verfügt über eine nicht näher dargestellte Einrichtung zum Aufschäumen von Milch für die Zubereitung von Milchschaumgetränken, wie beispielsweise Cappuccino. Die Milchschaumbereitung erfolgt bei der Kaffeemaschine 1 durch Verwendung von Heißdampf. Zum Aufschäumen von Milch wird Heißdampf der für die Milchaufschäumung eingesetzten Aufschäumdüse zugeführt, die infolge des zugeführten Heißdampfes zum Ansaugen von Luft und zum Ansaugen von Milch nach Art einer Saugstrahlpumpe arbeitet. Die zur Bereitung eines Milchmischgetränkes benötigte Milch ist in einer Kühlvorrichtung 2 bevorratet. Die Kühlvorrichtung 2 ist mit der Aufschäumdüse der Kaffeemaschine 1 durch einen Schlauch 3 als Teil der Milchansaugleitung verbunden.

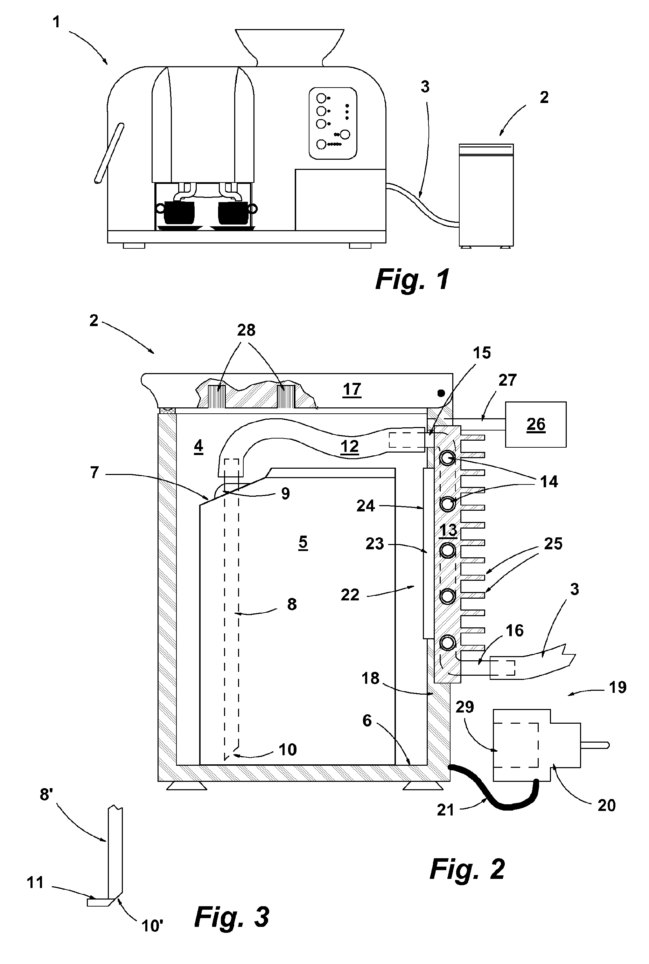

Figur 2 zeigt den Aufbau der Kühlvorrichtung 2. Die Kühlvorrichtung 2 ist nach Art eines Behälters - ähnlich einem Kühlschrank - ausgebildet und verfügt über einen Innenraum 4 zur Aufnahme eines Milchbehälters 5, in dem die vorhandene Milch enthalten ist. Bei dem in Figur 2 dargestellten Ausführungsbeispiel handelt es sich bei dem Milchbehälter um eine quaderförmige Milchtüte 5, die mit ihrer Unterseite auf dem Boden 6 des Innenraums der Kühlvorrichtung 2 aufsteht. Die Milchtüte 5 ist durch Abschneiden einer ihrer oberen Ecken geöffnet. Der geöffnete Bereich der Milchtüte 5 ist in Figur 2 mit dem Bezugszeichen 7 gekennzeichnet. In die Milchtüte 5 ragt ein vorzugsweise aus Edelstahl hergestelltes Entnahmerohr 8 als Entnahmeeinrichtung hinein. Das Entnahmerohr 8 trägt außenseitig ein Halte- und Anschlagelement 9. Bei diesem handelt es sich bei dem ausgestellten Ausführungsbeispiel um ein Gummiwerkstück. Dieses Element 9 ist reibschlüssig an der äußeren Mantelfläche des Entnahmerohrs 8 gehalten und kann manuell in längsaxialer Richtung auf dem Entnahmerohr 8 bewegt werden. Das Element 9 weist eine solche radiale Erstreckung auf, dass dieses auf der Oberseite des geöffneten Bereiches 7 der Milchtüte 5 aufliegt, wie dieses in Figur 2 dargestellt ist. Der Reibschluss zwischen dem Halte- und Anschlagelement 9 und dem Entnahmerohr 8 ist ausreichend groß, damit von dem auf der Oberseite der Milchtüte 5 aufliegenden Halte- und Anschlagelement 9 das in die Milchtüte 5 hineinragende Entnahmerohr 8 gehalten ist. Somit dient das Halte- und Anschlagelement 9 zum Einrichten der in das Innere der Milchtüte 5 hineinragenden Länge des Entnahmerohrs 8. In Abhängigkeit von der Höhe des in die Kühlvorrichtung 2 eingesetzten Milchbehälters wird das Halte- und Anschlagelement 9 in Bezug auf das Entnahmerohr 8 eingerichtet. Das Entnahmerohr 8 kann zum erleichterten Einrichten des Halte- und Anschlagelementes 9 bezüglich der Höhe des Entnahmerohres hinsichtlich der üblicherweise in ihrer Größe standardisierten Milchbehälter außenseitig Markierungen tragen, die die Länge der jeweils in die unterschiedlich hohen Milchbehälter hineinragenden Abschnitte des Entnahmerohrs 8 definieren.

Das Entnahmerohr 8 verfügt über eine untere angeschrägte Ansaugöffnung 10. Bei dem in Figur 2 dargestellten Ausführungsbeispiel dient das Halte und Anschlagelement 9 damit das untere Ende des Entnahmerohres 8 von der Innenseite des Bodens des Milchbehälters 5 beabstandet ist, um diese nicht zu verletzen.

In einem weiteren Ausführungsbeispiel ist das untere Ende des Entnahmerohres mit einem aufgrund seiner schrägen Ansaugöffnung 10' halbseitigen Aufsetzflansch ausgestattet, wie dieses in Figur 3 dargestellt ist. Das Entnahmerohr 8' ist vorgesehen, damit dieses am Boden des Milchbehälters aufsitzt. Der Aufsetzflansch 11 verhindert dabei eine Beschädigung der Innenwand des Milchbehälters.

Das Entnahmerohr 8 ist Teil der Milchansaugleitung. Angeschlossen ist das Entnahmerohr 8 an einen flexiblen Schlauchabschnitt 12. Bei dem dargestellten Ausführungsbeispiel ist der Schlauchabschnitt 12 auf das freie Ende des Entnahmerohrs 8 aufgestülpt. Die Verbindung zwischen dem Schlauchabschnitt 12 und dem Entnahmerohr 8 ist bei dem dargestellten Ausführungsbeispiel lösbar konzipiert, um die Handhabung des Entnahmerohres 8 bei einem Auswechseln des Milchbehälters 5 zu erleichtern. Eine lösbare Verbindung ist jedoch nicht zwingend erforderlich. Ist zwischen dem Entnahmerohr 8 und dem Schlauchabschnitt 12 eine lösbare Verbindung vorgesehen, kann diese auch durch zwei miteinander zusammenwirkende Kupplungsabschnitte, die nach Art einer Schlauchkupplung augegebildet sein können, realisiert sein. Beispielsweise kann der Schlauchabschnitt 12 an seinem freien Ende ein Kupplungsstück tragen, das nach Art eines Bajonettkupplungsringes ausgebildet ist und in das das Entnahmerohr mit seinem oberen Ende, ausgestattet mit komplementären Bajonettverriegelungselementen, eingreift.

Der Schlauchabschnitt 12 verbindet das Entnahmerohr 8 mit einem in einem Kühlelement 13 integrierten Kanal 14. Der Kanal 14 ist mäanderförmig in dem Kühlelement 13 integriert. Der Kanal 14 verfügt über einen in den Innenraum 4 der Kühlvorrichtung 2 hineinragenden Anschlussstutzen 15, auf den das andere Ende des Schlauchabschnitts 12 aufgeschoben ist. Der Kanal 14 endet an einem nach außen abragenden Anschlussstück 16, auf den der die Kühlvorrichtung 2 mit der Kaffeemaschine 1 bzw. seiner Milchaufschäumeinrichtung verbindende Schlauch 3 aufgesetzt ist. Somit dient der Kanal 14 als fest installierte Durchführung zum Herausführen der Milchansaugleitung aus dem Innenraum 4 der Kühlvorrichtung 2 nach außen.

Die Wände der kastenförmigen Kühlvorrichtung 2 bestehen aus einem wärmeisolierenden Material und/oder weisen einen wärmeisolierenden Aufbau auf. Verschlossen ist die Kühlvorrichtung 2 oberseitig durch einen Deckel 17, der schwenkbar an der Rückwand 18 der Kühlvorrichtung 2 angebracht ist.

Die Kühlvorrichtung 2 verfügt über eine elektrische Stromversorgungseinrichtung 19 zum Anschließen der Kühlvorrichtung 2 an das Stromnetz. Dargestellt sind der Einfachheit halber von der Stromversorgungseinrichtung 19 lediglich der elektrische Anschlussstecker 20 sowie das Anschlusskabel 21. Die weiteren Elemente der elektrischen Stromversorgung wie etwa ein Transformator, elektrische/elektronische Steuereinrichtung etc. sind der Übersicht halber nicht dargestellt. Gleiches gilt für die elektrische Verdrahtung innerhalb der Kühlvorrichtung 2. Die Kühlvorrichtung 2 verfügt über mehrere elektrische Aktoren. Bei diesen handelt es sich um eine Kühleinrichtung 22 zum Kühlen des Innenraumes 4 und somit der in dem jeweils eingestellten Milchbehälter 5 enthaltenen Milch. Als kühlendes Element dient bei dem dargestellten Ausführungsbeispiel ein Peltierelement 23, welches mit seiner einen Oberseite 24 in den Innenraum 4 der Kühlvorrichtung 2 hineinragend angeordnet ist. An die andere Flachseite des Peltierelements 23 ist das Kühlelement 13 in wärmeleitender und/oder wärmeübertragender Verbindung angeordnet. Das Peltierelement 23 ist geschaltet, damit die zum Innenraum 4 weisende Oberseite 24 die Kaltseite darstellt. Das Kühlelement 13 dient zum Abführen der über das Peltierelement 23 dem Innenraum 4 entnommenen Wärme und zum Abgeben derselben. Aus diesem Grunde trägt das Kühlelement außenseitig mehrere Kühlrippen 25. Die Kühleinrichtung 22 kann zudem über einen in den Figuren nicht dargestellten Lüfter verfügen, dessen Luftstrom auf die Kühlrippen 25 des Kühlelementes 13 gerichtet ist, um die Kühlleistung des Peltierelements 23 zu erhöhen. Der Kanal 14 ist bei dem dargestellten Ausführungsbeispiel durch einen mäanderförmig ausgebildeten Edelstahlrohreinsatz gebildet, der in das als Aluminiumgussteil hergestellte Kühlelement 13 integriert ist. Bei einer Entnahme von Milch aus der Milchtüte 5 durchströmt diese den Kanal 14 des Kühlelements 13 und unterstützt auf diese Weise die Wärmeabfuhr des Kühlelements und trägt somit zur Verbesserung der Kühlleistung der Kühleinrichtung 22 bzw. zu einer Reduzierung des Stromverbrauches desselben bei. Aus diesem Grunde ist der Kanal 14 mäanderförmig konzipiert, damit die hindurchströmende kalte Milch über eine längere Strecke durch das Kühlelement 13 hindurchgeführt wird und eine entsprechend größere Wärmemenge aufnehmen kann. Durch diese Maßnahme wird nicht nur die Kühlleistung verbessert, sondern gleichzeitig die gekühlte entnommene Milch vorerwärmt, so dass diese bereits erwärmt zur Zubereitung des gewünschten Milchgetränkes, beispielsweise des Milchschaumgetränkes der Kaffeemaschine 1 zugeführt wird. Überdies ist durch das vorbeschriebene Kühlelement eine Milchausleitung realisiert, durch die die Milch aus der Kühlvorrichtung herausgebracht wird. Somit kommen dem Kühlelement als solchem unterschiedliche und sich einander ergänzende Funktionen zu.

Die Kühlvorrichtung 2 verfügt als weiteren elektrischen Aktor über eine Pumpe 26, die in Figur 2 lediglich blockschematisiert dargestellt ist. Die Pumpe 26 ist über eine Pumpleitung 27 mit dem Innenraum 4 der Kühlvorrichtung 2 verbunden. Die Pumpe 26 fördert bei einem Betrieb derselben Umgebungsluft und dient zum Erhöhen des statischen Innendruckes in dem Innenraum 4 der Kühlvorrichtung 2. Die Erhöhung des Innendruckes des Innenraums 4 dient dem Zweck der Vermeidung eines unkontrollierten Eindringens von Umgebungsluft in den Innenraum 4 und damit der Haltbarkeit der in der Kühlvorrichtung 2 bevorrateten Milch. Es versteht sich, dass die Pumpe 26 nicht kontinuierlich betrieben werden muss. Ist die Kühlvorrichtung 2 verschlossen, kann Umgebungsluft nicht eindringen. Daher wird man die Pumpe 26 dann betreiben, wenn die Kühlvorrichtung 2 beispielsweise zum Auswechseln des Milchbehälters geöffnet wird. Bei einer solchen Betriebsart ist es zweckmäßig, wenn die Pumpe 26 bereits kurz vor dem Öffnen oder gleichzeitig mit dem Öffnen zu arbeiten beginnt. Die durch die Pumpe geförderte Luft durchströmt einen in den Figuren nicht dargestellten Filter zum Zurückhalten von im Innenraum 4 der Kühlvorrichtung 2 nicht erwünschten Partikeln oder Keimen.

Die Kühlvorrichtung 2 verfügt als weiteren elektrischen Aktor über eine Ozonerzeugungseinrichtung. Zum Erzeugen von Ozon in dem Innenraum 4 der Kühlvorrichtung 2 dienen bei dem dargestellten Ausführungsbeispiel mehrere Hochspannungselektroden 28, die in nicht näher dargestellter Art und Weise an einen Hochspannungsgenerator angeschlossen sind. Bei den Hochspannungselektroden 28 handelt es sich um Karbonfaserbündel.

Die Hochspannungselektroden 28 dienen zum Erzeugen von Ozon als keimabtötendes Gas. Anstelle der Hochspannungselektroden 28 können auch andere Hochspannungselektroden ebenso eingesetzt werden wie ein oder mehrere UV-Lampen. Die Ozonerzeugung erfolgt vorzugsweise oberhalb der Öffnung des Milchbehälters 5. Daher sind die Hochspannungselektroden 28 bei dem dargestellten Ausführungsbeispiel in den Deckel 17 integriert. Bei einem Betrieb der Hochspannungselektroden 28 erzeugen diese Ozon unmittelbar unterhalb des Deckels 17. Aufgrund seines spezifischen Gewichtes sinkt das gebildete Ozon schwerkraftsbedingt in Richtung zum Boden 6 des Innenraums 4 und dringt hierbei insbesondere auch in die durch den geöffneten Bereich 7 gebildete Öffnung der Milchtüte 5 in das Innere derselben ein. Die in der Kühlvorrichtung 2 bevorratete Milch befindet sich sodann in einer Schutzgasatmosphäre, wodurch die Haltbarkeit der Milch deutlich verlängert wird.

Die vorbeschriebenen elektrischen Aktoren sind an eine Steuereinrichtung angeschlossen, durch die diese angesteuert und der Arbeitstakt sowie die Arbeitstaktlänge vorgegeben wird.

Der elektrische Anschlussstecker 20 der Kühlvorrichtung 2 verfügt seinerseits über eine elektrische Steckdose 29. Die Steckdose 29 ist vorgesehen, damit darin der elektrische Anschlussstecker der Kaffeemaschine 1 eingesetzt wird. Der in die Steckdose 29 eingesetzte Stecker ist über den Stecker 20 unmittelbar an das Stromnetz angeschlossen. Der Anschlussstecker 20 beinhaltet eine Stromüberwachungseinrichtung, durch die überwacht wird, ob die Kaffeemaschine 1 eingeschaltet ist oder nicht. In Abhängigkeit von dem Zustand der Kaffeemaschine 1 ist die Kühlvorrichtung 2 bestromt oder der Stromfluss zur Kühlvorrichtung 2 unterbrochen. Eine Bestromung der Kühlvorrichtung 2 erfolgt dann, wenn durch die in dem Stecker 20 integrierte Stromüberwachungseinrichtung, die beispielsweise nach Art einer Widerstandsschaltung ausgelegt sein kann, detektiert wird, dass die Kaffeemaschine 1 eingeschaltet ist. Ein eigenes Ein- und Ausschalten der Kühlvorrichtung 2 ist dann nicht erforderlich.

In einer weiteren, in den Figuren nicht dargestellten Ausgestaltung ist dem Entnahmerohr der Kühlvorrichtung ein Schwimmer zugeordnet. Dieser dient als Geberelement einer Sensoreinrichtung zum Anzeigen des Füllstandes des Milchbehälters. Die Höhe des Schwimmers ist ein Maß für den Befüllungsstand des Milchbehälters. Derartige Füllstandsanzeigen sind hinlänglich bekannt. Der Schwimmer selbst kann als das Entnahmerohr einschließender Ring ausgebildet sein. Gemäß einer weiteren Ausgestaltung ist das Entnahmerohr zweikammerig ausgebildet, wobei die eine Kammer Teil der Milchansaugleitung und die andere Kammer zur Aufnahme des Schwimmers dient. Auch eine solche Füllstandsanzeige stellt einen elektrischen Aktor ein. Über eine Signalleistung kann der Füllstand einer Anzeige zugeführt werden.

In der vorstehenden Beschreibung der Kühlvorrichtung 2 sind die elektrischen Aktoren in Kombination miteinander beschrieben. Gleichwohl lässt sich die Erfindung auch realisieren, wenn die Kühlvorrichtung nur einen oder nur einen Teil der vorbeschriebenen Aktoren aufweist.

### Bezugszeichenliste

- 1: Kaffeemaschine
- 2: Kühlvorrichtung
- 3: Schlauch
- 4: Innenraum
- 5: Milchtüte
- 6: Boden
- 7: Geöffneter Bereich der Milchtüte
- 8, 8': Entnahmerohr
- 9: Halte- und Anschlagelement
- 10,10': Ansaugöffnung
- 11: Aufsetzflansch
- 12: Schlauchabschnitt
- 13: Kühlelement
- 14: Kanal
- 15: Anschlussstutzen
- 16: Anschlussstutzen
- 17: Deckel
- 18: Rückwand
- 19: Stromversorgungseinrichtung
- 20: Anschlussstecker
- 21: Anschlusskabel
- 22: Kühleinrichtung
- 23: Peltierelement
- 24: Oberseite
- 25: Kühlrippe
- 26: Pumpe
- 27: Pumpleitung
- 28: Hochspannungselektrode
- 29: Steckdose

## Patentansprüche

1. Kühlvorrichtung zur Aufnahme eines Milchbehälters (5), umfassend eine Entnahmeeinrichtung zum Entnehmen von in dem Milchbehälter (5) enthaltener Milch mit einer zum Anschließen an eine Pumpe geeigneten Milchansaugleitung (8, 12, 14, 3) sowie eine elektrische Stromversorgung (19), **dadurch gekennzeichnet, dass** die Stromversorgung (19) eine Stromüberwachungseinrichtung zum Überwachen des Zustandes einer der Kühlvorrichtung (2) zugeordneten, von dem Milchbehälter (5) entnommene Milch ausgebenden und/oder verarbeitenden Maschine, insbesondere einer Kaffeemaschine (1) umfasst und die Kühlvorrichtung (2) bestromt ist, wenn die Maschine (1) eingeschaltet ist.

2. Kühlvorrichtung nach Anspruch 1, **dadurch gekennzeichnet, dass** die Kühlvorrichtung (2) einen die Stromüberwachungseinrichtung enthaltenen Stecker (20) zum Anschließen der Kühlvorrichtung (2) an eine Steckdose und der Stecker (20) selbst eine Steckdose (29) zum Einsetzen des der elektrischen Stromversorgung dienenden Steckers der Maschine, beispielsweise der Kaffeemaschine (1) aufweist.

3. Kühlvorrichtung nach Anspruch 1 oder 2, **dadurch gekennzeichnet, dass** die Stromüberwachungseinrichtung als Widerstandsschaltung ausgelegt ist.

4. Kühlvorrichtung zur Aufnahme eines Milchbehälters (5), umfassend eine Entnahmeeinrichtung zum Entnehmen von in dem Milchbehälter (5) enthaltener Milch mit einer zum Anschließen an eine Pumpe geeigneten Milchansaugleitung (8, 12, 14, 3) sowie eine elektrische Stromversorgung (19), **dadurch gekennzeichnet, dass** die Kühlvorrichtung (2) zumindest ein den Innenraum (4) kühlendes Element, insbesondere ein Peltierelement (23) aufweist, das zum Kühlen des den Milchbehälter (5) aufnehmenden Innenraums (4) der Kühlvorrichtung (2) geschaltet ist und das den Innenraum (4) kühlende Element (23) zur Wärmeabgabe über ein Kühlelement (13) mit einem integrierten flüssigkeitsdurchströmbaren Kanal (14) verfügt, welcher Kanal (14) in die Milchansaugleitung eingeschaltet ist.

5. Kühlvorrichtung nach Anspruch 4, **dadurch gekennzeichnet, dass** das Kühlelement (13) nach außen abragende Kühlrippen (25) trägt.

6. Kühlvorrichtung nach Anspruch 4 oder 5, **dadurch gekennzeichnet, dass** das Kühlelement (13) ein Aluminiumgussteil mit einem darin eingegossenen, den Kanal bildenden mäanderartig ausgebildeten Edelstahlrohr ist.

7. Kühlvorrichtung zur Aufnahme eines Milchbehälters (5), umfassend eine Entnahmeeinrichtung zum Entnehmen von in dem Milchbehälter (5) enthaltener Milch mit einer zum Anschließen an eine Pumpe geeigneten Milchansaugleitung (8, 12, 14, 3) sowie eine elektrische Stromversorgung (19), **dadurch gekennzeichnet, dass** die Kühlvorrichtung (2) eine Einrichtung (26, 27) zum Erhöhen des statischen Drucks in dem den Milchbehälter (5) aufnehmenden Innenraum (4) aufweist.

8. Kühlvorrichtung zur Aufnahme eines Milchbehälters (5), umfassend eine Entnahmeeinrichtung zum Entnehmen von in dem Milchbehälter (5) enthaltener Milch mit einer zum Anschließen an eine Pumpe geeigneten Milchansaugleitung (8, 12, 14, 3) sowie eine elektrische Stromversorgung (19), **dadurch gekennzeichnet, dass** die Kühlvorrichtung (2) eine Einrichtung zum Erzeugen von Ozon aufweist, welche Ozonerzeugungseinrichtung ausgelegt ist, damit das Ozon oberhalb der Entnahmeöffnung (7) des Milchbehälters (5) in den Innenraum (4) der Kühlvorrichtung (2) eintritt oder dort gebildet wird.

9. Kühlvorrichtung nach Anspruch 8, **dadurch gekennzeichnet, dass** die Ozonerzeugungseinrichtung über ein oder mehrere Hochspannungselektroden (28) verfügt.

10. Kühlvorrichtung nach Anspruch 9, **dadurch gekennzeichnet, dass** die zumindest eine Hochspannungselektrode (28) eine Faserbündelelektrode, insbesondere eine solche aus Karbonfasern ist.

11. Kaffeemaschine mit einer dieser zugeordneten Kühlvorrichtung (2) zur Aufnahme eines Milchbehälters (5), **dadurch gekennzeichnet, dass** die Kühlvorrichtung (2) die Merkmale eines oder mehrerer der Ansprüche 1 bis 10 aufweist.
